# EUROPÄISCHE PATENTSCHRIFT

(11) **EP 3 404 001 B1**
(45) Veröffentlichungstag und Bekanntmachung des Hinweises auf die Patenterteilung: **04.03.2020**
(21) Anmeldenummer: 18172723.1
(22) Anmeldetag: 16.05.2018
(51) Int. Cl.: C04B 28/04

(54) **ERDFEUCHTER FRISCHBETON UND BETONELEMENTE AUS GEHÄRTETEM ERDFEUCHTEN FRISCHBETON**
EARTH-MOIST FRESH CONCRETE AND CONCRETE ELEMENTS MADE FROM HARDENED EARTH-MOIST, FRESH CONCRETE
BÉTON FRAIS À CONSISTANCE DE TERRE HUMIDE ET ÉLÉMENTS EN BÉTON FRAIS À CONSISTANCE DE TERRE HUMIDE DURCI

(30) Priorität: 19.05.2017 CH 6552017
(43) Veröffentlichungstag der Anmeldung: 21.11.2018
(73) Patentinhaber: A.Tschümperlin AG, 6341 Baar (CH)
(72) Erfinder: MANTEY, Alexander, 6353 Weggis (CH); GABRIEL, Andreas, 6373 Ennetbürgen (CH)
(74) Vertreter: Troesch Scheidegger Werner AG

(56) Entgegenhaltungen:
- EP-A1- 0 945 412
- EP-A1- 2 891 752
- DE-A1- 19 804 325
- DE-U1- 20 023 609
- DE-U1- 29 724 643
- DE-U1-202007 002 982

## Beschreibung

Die vorliegende Erfindung betrifft erdfeuchten Frischbeton und ein Verfahren zum Herstellen von erdfeuchtem Frischbeton. Des Weiteren betrifft die Erfindung ein Betonelement hergestellt aus gehärtetem erdfeuchten Frischbeton, d.h. aus Festbeton, dessen Herstellung und Anwendung.

Auch wenn die Verwendung von Beton als Baustoff durchaus eine lange Tradition hat, heisst dies nicht, dass es auf diesem Gebiet kein Bedarf an Weiterentwicklung und Innovation geben würde. Schaut man sich das breite Angebot an verschiedenem Beton an, so gewinnt man den Eindruck, dass je nach Verwendungszweck und Anforderungsprofil nur noch ein passender Beton mit entsprechenden Eigenschaften aus der Vielzahl verschiedener Betonarten ausgewählt werden muss. Sucht man jedoch nach einem Beton, der die Eigenschaften "leicht" und "belastbar" zufriedenstellend vereint, so sucht man vergebens.

Aus der EP 2 891 752 A1 ist ein Formkörper aus Leichtwerkstoff und ein Verfahren zu dessen Herstellung sowie Verwendung bekannt. Besagter Leichtwerkstoff umfasst zumindest eine Gesteinskörnung (z.B. Blähglas) und ein Bindemittel. Der Formkörper aus Leichtwerkstoff kann zur Schall- oder Wärmeisolation verwendet werden. Aus der DE 198 04 325 A1 bekannt sind monolithische Bauplatten auf Zementbasis, in welchen Leichtzuschläge, wie z.B. Schaumglas mit einer Korngrösse von üblicherweise unter 5 mm oder unter 2 mm, eingesetzt werden können. Die DE 20 2007 002982 U1 betrifft einen Mauerstein aus Leichtbeton, dessen Ausgangsmischung Leichtzuschläge, wie z.B. Blähglas, umfassen kann. Ein Gemisch zur Herstellung eines hitzebeständigen Bauteils aus Leichtbeton, dessen Basismischung unter anderem Glasschaumgranulat mit einer Korngrösse von 0.5 bis 1 mm zugegeben werden kann, ist in der DE 297 24 643 U1 beschrieben. Die DE 200 23 609 U1 betrifft monolithische Bauplatten hergestellt aus einer Mischung, welche mindestens einen Zuschlagsstoff, wie z.B. Schaumglas, aufweist. Die EP 0 945 412 A1 beschreibt ein Verbund-Formteil, welches sich auszeichnet durch einzelne anorganische unregelmässige, scharfkantige, spannungsfreie Schaumkörper aus Schaumglas (insbesondere Schaumglassplitter oder Schaumglasschotter) ungleicher Grösse. Weiter beschrieben ist u.a. die Verwendung der Verbund-Formteile zur Wärme- und Kältedämmung.

Die Aufgabe der vorliegenden Erfindung besteht darin, ein Ausgangsmaterial für die Herstellung eines leichten und trotzdem belastbaren Betonelements bereitzustellen. Eine weitere Aufgabe besteht darin, ein Herstellungsverfahren für das Ausgangsmaterial selbst bereitzustellen. Eine wiederum weitere Aufgabe besteht darin, ein Herstellungsverfahren für ein solches Betonelement aus dem besagten Ausgangsmaterial und ein solches Betonelement bereitzustellen.

Die Aufgabe der Erfindung wird gelöst durch ein Ausgangsmaterial, nämlich einen erdfeuchten Frischbeton gemäss Anspruch 1, welcher mindestens ein Bindemittel, mindestens ein Hydratisierungsmittel und Schaumglasbrocken mit Durchmessern von >0 mm bis ≤16 mm als Zuschlagsstoff umfasst.

Eine Beschreibung von erdfeuchtem Beton lässt sich beispielsweise finden in Roland Bornemanns "Untersuchungen zur Modellierung des Frisch- und Festbetonverhaltens erdfeuchter Betone", erschienen in der Schriftenreihe Baustoffe und Massivbau, 4. Heft, Kassel 2005. Darin heisst es: *"Erdfeuchter Beton ist ein technologischer "Zwitter": Im frischen und jungen (grünen) Zustand verhält er sich zunächst ähnlich wie ein gemischkörniger Boden. Durch die hohe innere Reibung und den kohäsiven Zusammenhalt der Partikel kann er unmittelbar nach dem Verdichten entformt, transportiert und gelagert werden, ohne dass er zerfällt oder dass er sich unzulässig verformt. Mit zunehmender Erhärtung wird er zu einem sehr festen und widerstandsfähigen Beton, der z.B. als Pflasterstein jahrzehntelang starke Verkehrsbelastungen ebenso dauerhaft erträgt wie die scharfe Beanspruchung durch Frost- und Tausalz*."

Durch die Verwendung von Schaumglas konnte ein Zuschlagsstoff gefunden werden, der über eine geringe Dichte und trotzdem über eine hohe Druckfestigkeit verfügt. Besonders für gebrochenes Schaumglas, sprich Schaumglasbrocken, mit einem Durchmesser von grösser null bis einschliesslich 16 mm konnte der typische Charakter erdfeuchten Betons gewahrt werden.

Als Hydratisierungsmittel kommt normalerweise immer Wasser zum Einsatz und das Bindemittel kann Zement, wie bspw. Weisszement (z.B. CEM I 52,5 R von Colacem SpA, Gubbio), Portlandzement (z.B. CEM I 52,5 R von Colacem SpA, Gubbio), oder eine Mischung daraus sein. Zusätzlich kann das Bindemittel bspw. getemperten Phonolith enthalten.

Die Dichte eines solchen erdfeuchten Frischbetons beträgt zwischen 1000-1700 kg/m³, bevorzugt < 1500 kg/m³. Im Vergleich: bei Normalbeton beträgt die Trockenrohdichte zwischen 2000 und 2600 kg/m³. Die Dichte von bekanntem erdfeuchtem Frischbeton beträgt für gewöhnlich 2300-2400 kg/ m³. Der erfindungsgemässe erdfeuchte Frischbeton kann den Konsistenzklassen SF1 bis SF3 zugeordnet werden. Fliessfähiger Beton hingegen gehört den Konsistenzklassen F3 bis F6 an.

In der erfindungsgemässen Ausführungsform des erdfeuchten Betons gemäss Anspruch 1, welche mit jeder der noch zu nennenden Ausführungsformen kombiniert werden kann, sofern nicht im Widerspruch dazu, sind die Schaumglasbrocken aus den folgenden Volumenteilen zusammengesetzt:
- 2 Teile Schaumglasbrocken mit Durchmessern im Bereich von >0 mm bis ≤4 mm (Klasse kleiner Durchmesser);
- 1 Teil Schaumglasbrocken mit Durchmessern im Bereich von >4 mm bis ≤8 mm (Klasse mittlerer Durchmesser); und
- 1 Teil Schaumglasbrocken mit Durchmessern im Bereich von >8 mm bis ≤16 mm (Klasse grosser Durchmesser).

Bei der Verwendung der Schaumglasbrocken klassifiziert nach den Durchmessern klein:mittel:gross im Verhältnis von ca. 2:1:1 konnte ein besonders positiver Effekt auf innerer Reibung und Verzahnung beobachtet werden. Die Aufteilung bezieht sich auf das Volumen, sodass die Schaumglasbrocken für die Herstellung von 1 m³ erdfeuchten Frischbeton beispielsweise wie folgt zusammengesetzt sind:
- 192 l Schaumglasbrocken mit einem Durchmesser von grösser null mm bis einschliesslich 4 mm (Durchmesserklasse klein),
- 96 l Schaumglasbrocken mit einem Durchmesser von grösser 4 mm bis einschliesslich 8 mm (Durchmesserklasse mittel),
- 96 l Schaumglasbrocken mit einem Durchmesser von grösser 8 mm bis einschliesslich 16 mm (Durchmesserklasse gross).

Umgerechnet auf deren Masse wären dies:
- 188 kg Schaumglasbrocken mit einem Durchmesser von grösser null mm bis einschliesslich 4 mm (Durchmesserklasse klein),
- 53 kg Schaumglasbrocken mit einem Durchmesser von grösser 4 mm bis einschliesslich 8 mm (Durchmesserklasse mittel), und
- 51 kg Schaumglasbrocken mit einem Durchmesser von grösser 8 mm bis einschliesslich 16 mm (Durchmesserklasse gross).

Dass die Massenverhältnisse abweichen von den Volumenverhältnissen liegt daran, dass bei den kleineren Durchmesserklassen die Dichte höher ist, denn der Anteil an eingeschlossener Luft in den Poren ist bei einem grösseren Schaumglasbrocken höher als bei einem kleineren Schaumglasbrocken, da der kleinere Schaumglasbrocken mehr aufgebrochenen, nicht mehr geschlossenen Luftporen aufweist.

Die beispielhaft explizit angegebenen Volumina und Massen gelten für den Fall, dass die Verhältnisse der Volumenanteile an Schaumglasbrocken klein:mittel:gross zueinander im Verhältnis 2.00:1.00:1.00 stehen. Das Verhältnis 2:1:1 ist jedoch weitaus breiter zu verstehen, sodass auch prozentuale Abweichungen von diesem Verhältnis um ±20%, insbesondere um ±10% oder um ±5% ebenfalls von besagtem 2:1:1 Verhältnis abgedeckt sind.

Die folgende Tabelle gibt weitere Beispiele für eine mögliche Zusammensetzung der Schaumglasbrocken nach deren Durchmesser klassifiziert an. Neben dem Volumen in Litern zeigt die Tabelle auch die Volumenverhältnisse der Durchmesserklassen (klein, mittel, gross) jeweils normiert auf eine der Durchmesserklasse an.

| **Bsp.** | **Durchmesser [mm]** | **Volumen [l]** | **normiert auf (k)** | **normiert auf (m)** | **normiert auf (g)** |
|---|---|---|---|---|---|
| **1** | >0 - ≤4 (k) | 192 | 2.00 | 2.00 | **2.00** |
| | >4 - ≤8 (m) | 96 | 1.00 | **1.00** | 1.00 |
| | >8 - ≤16 (g) | 96 | **1.00** | 1.00 | 1.00 |
| **2** | >0 - ≤4 (k) | 209.28 | 2.40 | 2.40 | **2.00** |
| | >4 - ≤8 (m) | 87.36 | 1.00 | **1.00** | 0.83 |
| | >8 - ≤16 (g) | 87.36 | **1.00** | 1.00 | 0.83 |
| **3** | >0 - ≤4 (k) | 182 | 1.82 | 1.78 | **2.00** |
| | >4 - ≤8 (m) | 102 | 1.02 | **1.00** | 1.12 |
| | >8 - ≤16 (g) | 100 | **1.00** | 0.98 | 1.10 |
| **4** | >0 - ≤4 (k) | 182.4 | 1. 98 | 1.67 | **2.00** |
| | >4 - ≤8 (m) | 109.5 | 1.19 | **1.00** | 1.20 |
| | >8 - ≤16 (g) | 92.1 | **1.00** | 0.84 | 1.01 |
| **5** | >0 - ≤4 (k) | 204 | 2.17 | 2.37 | **2.00** |
| | >4 - ≤8 (m) | 86 | 0.91 | **1.00** | 0.84 |
| | >8 - ≤16 (g) | 94 | **1.00** | 1.09 | 0.92 |
| **6** | >0 - ≤4 (k) | 177 | 1.75 | 1.67 | **2.00** |
| | >4 - ≤8 (m) | 106 | 1.05 | **1.00** | 1.20 |
| | >8 - ≤16 (g) | 101 | **1.00** | 0.95 | 1.14 |
| **7** | >0 - ≤4 (k) | 201.6 | 2.21 | 2.21 | **2.00** |
| | >4 - ≤8 (m) | 91.2 | 1.00 | **1.00** | 0.90 |
| | >8 - ≤16 (g) | 91.2 | **1.00** | 1.00 | 0.90 |

Aus der obenstehenden Tabelle geht bspw. hervor, dass das Volumenverhältnis an Schaumglasbrocken mit kleinen Durchmessern zu den Schaumglasbrocken mit mittleren Durchmessern oder grossen Durchmessern in jedem Beispiel zwischen 2±20%, sprich zwischen 1.6 und 2.4 liegt. Das Verhältnis der Schaumglasbrocken mit mittleren Durchmessern zu den Schaumglasbrocken mit grossen Durchmessern und vice versa liegt zwischen 1±20%, sprich zwischen 0.8 und 1.2. Im selben Verhältnis stehen die Schaumglasbrocken mit mittleren Durchmessern respektive die Schaumglasbrocken mit grossen Durchmessern zu 2 Teilen Schaumglasbrocken mit kleinen Durchmessern.

In einer weiteren erfindungsgemässen Ausführungsform des erdfeuchten Frischbetons, welche mit jeder der bereits genannten Ausführungsformen und mit jeder der noch zu nennenden Ausführungsformen kombiniert werden kann, sofern nicht im Widerspruch dazu, umfasst der erdfeuchte Frischbeton Gewichtsanteile von Bindemittel, Hydratisierungsmittel und Schaumglasbrocken in folgendem Verhältnis:
- 4 Teile Bindemittel;
- 2 Teile Hydratisierungsmittel;
- 3 Teile Schaumglasbrocken mit Durchmessern von grösser 0 bis einschliesslich 16 mm.

Auch hier gilt, dass das Mengenverhältnisse 4:2:3 (Bindemittel:Hydratisierungsmittel:Schaumglasbrocken), in diesem Fall bezogen auf die Masse und nicht auf das Volumen, nicht als 4.00:2.00:3.00, sondern durchaus breiter zu verstehen ist. Abweichungen von diesem Verhältnis von 20%, insbesondere von 10% oder 5% sind ebenfalls von besagtem 4:2:3 Verhältnis abgedeckt sind.

In der folgenden Tabelle sind Beispiele für eine mögliche massenbezogene Zusammensetzung des erdfeuchten Frischbetons zusammengefasst.

| **Bsp.** | **Komponente** | **Masse [kg]** | **normiert auf (B)** | **normiert auf (H)** | **normiert auf (S)** |
|---|---|---|---|---|---|
| **1** | B | 400 | 4.11 | 4.00 | **4.00** |
| | H | 200 | 2.05 | **2.00** | 2.00 |
| | S | 292 | **3.00** | 2.92 | 2.92 |
| **2** | B | 410 | 4.32 | 4.16 | **4.00** |
| | H | 197 | 2.07 | **2.00** | 1.92 |
| | S | 285 | **3.00** | 2.89 | 2.78 |
| **3** | B | 361 | 3.45 | 3.33 | **4.00** |
| | H | 217 | 2.07 | **2.00** | 2.40 |
| | S | 314 | **3.00** | 2.89 | 3.48 |
| **4** | B | 390 | 4.02 | 3.70 | **4.00** |
| | H | 211 | 2.18 | **2.00** | 2.16 |
| | S | 291 | **3.00** | 2.76 | 2.98 |
| **5** | B | 360 | 3.38 | 3.40 | **4.00** |
| | H | 212 | 1.99 | **2.00** | 2.36 |
| | S | 320 | **3.00** | 3.02 | 3.56 |
| **6** | B | 431 | 4.77 | 4.54 | **4.00** |
| | H | 190 | 2.10 | **2.00** | 1.76 |
| | S | 271 | **3.00** | 2.85 | 2.52 |
| **7** | B | 400 | 3.92 | 4.30 | **4.00** |
| | H | 186 | 1.82 | **2.00** | 1.86 |
| | S | 306 | **3.00** | 3.29 | 3.06 |

| | | | | | |
|---|---|---|---|---|---|
| *B: Bindemittel, H: Hydratisierungsmittel, S: Schaumglasbrocken* | | | | | |

In allen eben tabellarisch aufgeführten Ausführungsbeispielen liegt das auf die Masse bezogene Verhältnis des Bindemittels zwischen 3.2 und 4.8 Teile, also im Bereich 4±20%, normiert auf 2 Teile Hydratisierungsmittel respektive 3 Teile Schaumglasbrocken. Das auf die Masse bezogene Verhältnis des Hydratisierungsmittels liegt zwischen 1.6 und 2.4 Teile, also im Bereich 2±20%, normiert auf 4 Teile Bindemittel respektive 3 Teile Schaumglasbrocken. Das auf die Masse bezogene Verhältnis der Schaumglasbrocken liegt zwischen 2.4 und 3.6 Teile, also im Bereich 3±20%, normiert auf 4 Teile Bindemittel respektive 2 Teile Hydratisierungsmittel.

Zusätzlich oder aber als Ersatz für einen Teil des Schaumglases kann auch Sand und/oder Kies als weiterer Zuschlagsstoff verwendet werden. Beispielsweise könnten dann 4 Teile Bindemittel, 2 Teile Hydratisierungsmittel, 2 Teile Schaumglasbrocken und 1 Teil Sand und/oder Kies bezogen auf die Masse eingesetzt werden.

In einer weiteren erfindungsgemässen Ausführungsform des erdfeuchten Frischbetons, welche mit jeder der bereits genannten Ausführungsformen und mit jeder der noch zu nennenden Ausführungsformen kombiniert werden kann, sofern nicht im Widerspruch dazu, umfasst der erdfeuchte Frischbeton mindestens ein Additiv, insbesondere Luftporenbildner, wie bspw. MasterAir 304 von der BASF, Fliessmittel, wie bspw. MasterGlenium ACE 404 von der BASF, und/oder Viskositätsmodifizierer, wie bspw. MasterMatrix SCC 2 von der BASF. Auch natürlich getempertes Puzzolan, wie z.B. Hydrolith® F200, kann allein oder in Kombination mit anderen Additiven eingesetzt werden.

Solche Additive können verwendet werden, um die Eigenschaften des erdfeuchten Frischbetons zu modifizieren und auf individuelle Bedürfnisse abzustimmen. Insbesondere kann durch sie Einfluss auf die innere Reibung und den kohäsiven Zusammenhalt des erdfeuchten Frischbetons genommen werden und so eine optimale Konsistenz erzielt werden. Auch die Verwendung von Farbpigmenten als Additiv ist möglich, um die Farbgebung des erdfeuchten Frischbetons zu verändern und dessen optisches Erscheinungsbild dem individuellen Geschmacksempfinden anzupassen. Für gewöhnlich werden solche Additive, bezogen auf die Masse eingesetzten Bindemittels, je in der Grössenordnung von 0.1 % - 1.5 % eingesetzt.

Die weitere Aufgabe wird gelöst durch ein Verfahren zum Herstellen von erdfeuchtem Frischbeton gemäss Anspruch 5. Dieses besagte Verfahren umfasst zu Beginn den Schritt des Mischens der Schaumglasbrocken und des Bindemittels für 30 bis 120 s. optional werden bei diesem Schritt auch ein oder mehrere in fester Form vorliegende Additive zugegeben, insofern ein solches festes Additiv zum Einsatz kommen soll. Im darauffolgenden Schritt, welcher ebenfalls optional ist, werden ein oder mehrere in flüssiger Form vorliegende Additive zugegeben. Es folgt die Zugabe des Hydratisierungsmittels und anschliessend wird erneut für 60 bis 180 s gemischt.

Solche Additive werden gerne auch als Zusatzmittel und/oder Zusatzstoffe bezeichnet. Meist werden dann unter den Zusatzmitteln flüssige Additive und unter den Zusatzstoffen feste bzw. pulverförmige Additive verstanden.

Die wiederum weitere Aufgabe wird gelöst durch ein Betonelement aus Festbeton gemäss Anspruch 6, hergestellt aus einem erfindungsgemässen erdfeuchten Frischbeton.

Hier ist anzumerken, dass Frischbeton den noch nicht erhärteten Beton bezeichnet, wohingegen der Begriff Festbeton für den erhärteten Frischbeton steht. Das erfindungsgemässe Betonelement besteht dementsprechend zumindest teilweise aus erhärtetem erfindungsgemässem erdfeuchten Frischbeton, also aus Festbeton.

Die Dichte eines solchen Festbetons aus erdfeuchtem Frischbeton beträgt 1000-1700 kg/m³, die Biegefestigkeit liegt bei 1.3 - 4.0 N/mm², insbesondere zwischen 3.1 - 3.5 N/mm², die Wärmeleitfähigkeit liegt bei 0.55 - 1.15 W/mK, insbesondere zwischen 0.62 - 0.89 W/mK, das E-Modul beträgt 6000 - 12000 N/m², insbesondere 8000 - 9000 N/m².

In einer erfindungsgemässen Ausführungsform des Betonelements, welche mit jeder der bereits genannten Ausführungsformen und mit jeder der noch zu nennenden Ausführungsformen kombiniert werden kann, sofern nicht im Widerspruch dazu, umfasst das Betonelement eine Deckschicht, insbesondere aus Sand und/oder Kies. Eine solche Deckschicht kann einerseits einen positiven Effekt auf die Optik haben, andererseits aber auch die Abriebfestigkeit erhöhen und so letztlich die Wirtschaftlichkeit eines Betonelements mit Deckschicht erhöhen. Die Deckschicht weist ein Bindemittel auf, wie bspw. Zement, welches für die Haftung innerhalb und zwischen den Schichten sorgt.

Die Deckschicht wird gebildet durch den sogenannten Vorsatzbeton. Dieser kann, wie bereits erwähnt, Sand und/oder Kies umfassen. Es können jedoch auch Schaumglasbrocken im Vorsatzbeton zum Einsatz kommen, entweder als einziger Zuschlagsstoff oder in Kombination mit Kies und/oder Sand.

Die wiederum weitere Aufgabe wird auch gelöst durch ein Verfahren zum Herstellen eines Betonelements gemäss Anspruch 8. Bei besagtem Verfahren wird eine Form erst mit erfindungsgemässem erdfeuchten Frischbeton beschickt, z.B. mit Hilfe eines Beschickungsschlittens. Das Verfahren umfasst weiter die Schritte des Rüttelns der beschickten Form, insbesondere für 5 bis 60 s, und des Pressens des erdfeuchten Frischbetons in der Form, insbesondere durch einen Hydraulikstempel. In einem weiteren Verfahrensschritt wird der gerüttelte und gepresste erdfeuchte Frischbeton ausgehärtet, insbesondere für mindestens 24 h.

Durch das Rütteln und Pressen wird der erdfeuchte Frischbeton verdichtet und durch das anschliessende Härten wird aus dem erdfeuchten Frischbeton Festbeton. Die optimale Aushärtezeit hängt von der genauen Zusammensetzung des erdfeuchten Frischbetons ab, und liegt für gewöhnlich bei 72 h oder mehr.

In einer erfindungsgemässen Ausführungsform des Verfahren zum Herstellen eines Betonelements, welche mit jeder der bereits genannten Ausführungsformen und mit jeder der noch zu nennenden Ausführungsformen kombiniert werden kann, sofern nicht im Widerspruch dazu, werden die Schritte des Rüttelns und des Pressens gleichzeitig, teilweise gleichzeitig, direkt nacheinander, oder zeitversetzt ausgeführt.

Durch das Modifizieren des zeitlichen Ablaufs von Rütteln und Pressen kann Einfluss auf den Verdichtungsgrad des erdfeuchten Frischbetons und somit auch auf die Eigenschaften des gehärteten erdfeuchten Frischbetons, d.h. auf den Festbeton, genommen werden. Auch ist es möglich, mindestens einen der Schritte des Rüttelns oder des Pressens mehrfach auszuführen.

In einer weiteren erfindungsgemässen Ausführungsform des Verfahren zum Herstellen eines Betonelements, welche mit jeder der bereits genannten Ausführungsformen und mit jeder der noch zu nennenden Ausführungsformen kombiniert werden kann, sofern nicht im Widerspruch dazu, umfasst das Verfahren den zusätzlichen Schritt des teilweisen Beschickens der Form mit Sand und/oder Kies. Dieser zusätzliche Schritt kann entweder vor, nach, oder vor und nach dem Schritt des Beschickens einer Form mit einem erdfeuchten Frischbeton ausgeführt werden.

Beschicken der Form mit Sand und/oder Kies vor und nach dem Schritt des Beschickens einer Form mit einem erdfeuchten Frischbeton ist beispielsweise interessant, wenn das Betonelement ein Wandelement werden soll. Bei Pflastersteinen oder Gehwegplatten bietet es sich an, die Oberseite des Betonelements mit einer Deckschicht zu versehen, um die Lebensdauer zu verlängern.

Weiter werden verschiedene Verwendungsmöglichkeiten für ein erfindungsgemässes Betonelement vorgeschlagen, gemäss Anspruch 11 die Verwendung eines erfindungsgemässen Betonelements als:
- Pflasterstein;
- Gehwegplatte;
- Dachplatte;
- Terrassenplatte;
- Gestaltungselement, wie bspw. Stellriemen;
- Lärmschutzelement; oder
- in Verbunddecken mit Holz.

Die Eigenschaften eines erfindungsgemässen Betonelements, nämlich das geringe Gewicht bei gleichzeitig hoher Stabilität, können ein besonderer Vorteil sein bei deren Verwendung in Form von beispielsweise Dachterrassenplatten. Dort ist aufgrund der Belastung der Dachterrasse durch deren Nutzung eine hohe Stabilität gefragt, gleichzeitig ist es vorteilhaft das Eigengewicht der

Dachterrassenplatten so gering wie möglich zu halten, da dieses von der darunterliegenden Decke und letztlich von der Gesamtgebäudekonstruktion mitgetragen werden muss. Auch können hier die wärmedämmende Eigenschaft des Betonelements aus Festbeton optimal genutzt werden. Diese wärmedämmende Eigenschaft kann bspw. auch bei der Anwendung eines erfindungsgemässen Betonelements als Bodenbelag, wie z.B. in Form von Gehwegplatten, Terrassenplatten oder Pflastersteinen, genutzt werden. So kann z.B. ein Freibadbecken umrandet, oder ein Weg vom Freibadbecken zu den Umkleidekabinen oder Sanitärräumen verlegt werden mit Platten aus erfindungsgemässem Festbeton. Dies hat den Vorteil, dass die sich in der Sonne aufgeheizten Platten die Wärme schlechter leiten, sodass sich Freibadbesucher die Füsse nicht verbrennen. Auch ist die geringe Dichte der Betonelemente aus erdfeuchtem Frischbeton von besonderem Vorteil für die Plattenleger, da deren Rücken, Gelenke etc. durch das geringere Gewicht weniger belastet werden. Auf grossflächigen Plätzen, wie beispielsweise öffentlichen Plätzen, sorgen die erfindungsgemässen Betonelemente, insbesondere die Pflastersteine, für ein besseres Klima durch ihre vorteilhaften Eigenschaften die Wärmeleitfähigkeit betreffend.

Ausführungsbeispiele der vorliegenden Erfindung werden nachstehend anhand von Figuren noch näher erläutert. Es zeigen
Fig. 1 einen Querschnitt durch ein Betonelement aus gehärtetem erfindungsgemässem erdfeuchten Frischbeton;
Fig. 2 einen Querschnitt durch ein weiteres Betonelement aus gehärtetem erfindungsgemässem erdfeuchten Frischbeton mit einer Deckschicht;
Fig. 3 ein Beispiel einer volumenbezogenen Zusammensetzung eines erfindungsgemässen erdfeuchten Frischbetons;
Fig. 4 ein Beispiel einer massebezogenen Zusammensetzung eines erfindungsgemässen erdfeuchten Frischbetons;

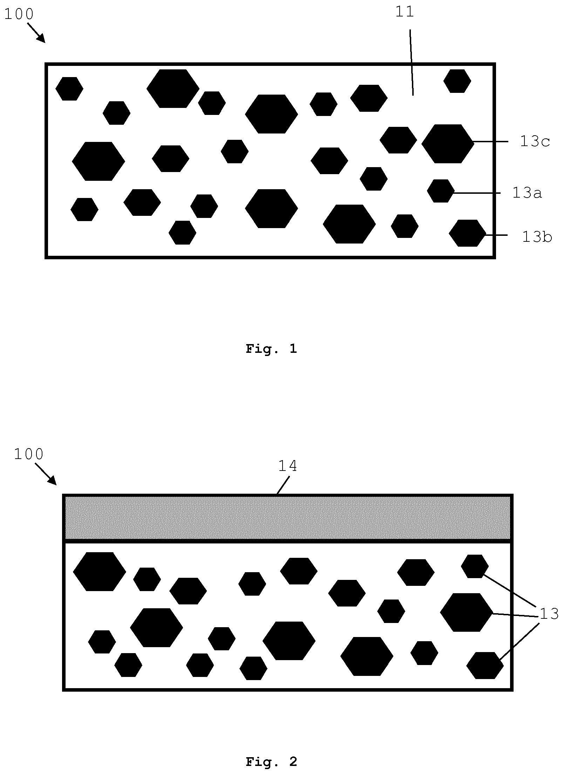

In Figur 1 ist beispielhaft ein Betonelement 100 aus Festbeton, hegestellt aus erdfeuchtem Frischbeton 10, dargestellt. Zu erkennen sind die zuvor mit einem Bindemittel 11, wie beispielsweise Zement, vermengten Brocken aus Schaumglas 13, welche im hydratisierten Bindemittel eingeschlossen sind. Die Schaumglasbrocken 13 besitzen unterschiedliche Durchmesser. In diesem Beispiel sind drei verschiedene Durchmesserklassen dargestellt, wobei das Volumen der kleinsten Durchmesserklasse 13a ungefähr dem Volumen der mittleren 13b und der grössten 13c Durchmesserklasse zusammen entspricht. Eine solche Durchmesserklasse kann beispielsweise aus Schaumglasbrocken mit einem Durchmesser von grösser 0 mm bis einschliesslich 4 mm bestehen. Eine weitere Durchmesserklasse kann Schaumglasbrocken von grösser 4 mm bis einschliesslich 8 mm umfassen und eine wiederum weitere Durchmesserklasse kann Schaumglasbrocken von grösser 8 mm bis einschliesslich 16 mm umfassen.

Figur 2 zeigt ebenfalls beispielhaft ein Betonelement 100 aus Festbeton, hegestellt aus erdfeuchtem Frischbeton 10. Im Gegensatz zu dem in Figur 1 dargestellten Betonelement weist dieses zusätzlich eine Deckschicht 14 auf. In dem dargestellten Beispiel ist diese aus Sand. Sie könnte jedoch z.B. auch aus einer Mischung aus Sand und Kies, oder nur aus Kies gebildet sein. Die Deckschicht umfasst neben Sand und/oder Kies auch ein Bindemittel.

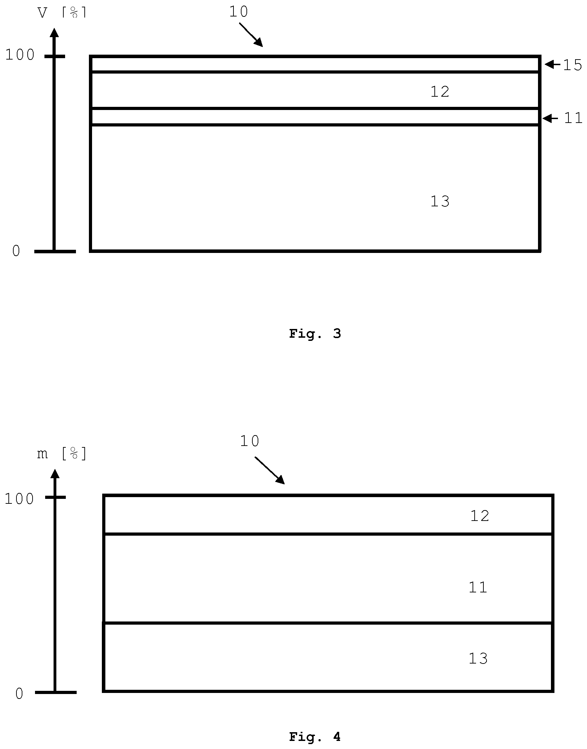

In Figur 3 ist schematisch dargestellt ein Beispiel für eine auf das Volumen bezogene Zusammensetzung eines erfindungsgemässen erdfeuchten Frischbetons 10. Der hier gezeigte erdfeuchte Frischbeton 10 setzt sich zusammen aus 63 %vol. Schaumglasbrocken (13), 13 %vol. Bindemittel (11), 20 %vol. Hydratisierungsmittel (12) und 4 %vol. Luft (15). In anderen Ausführungsformen kann sich der erdfeuchte Frischbeton 10 jedoch zusammensetzten aus beispielsweise 50-75 %vol. Schaumglasbrocken (13), 8-18 %vol. Bindemittel (11), 15-25 %vol. Hydratisierungsmittel (12) und 3-13 %vol. Luft (15).

In Figur 4 ist schematisch dargestellt ein Beispiel für eine auf die Masse bezogene Zusammensetzung eines erfindungsgemässen erdfeuchten Frischbetons 10. Der hier gezeigte erdfeuchte Frischbeton 10 setzt sich zusammen aus 33 %m Schaumglasbrocken (13), 45 %m Bindemittel (11) und 22 %m Hydratisierungsmittel (12).

## Patentansprüche

1. Erdfeuchter Frischbeton (10) umfassend:
• mindestens ein Bindemittel (11);
• mindestens ein Hydratisierungsmittel (12); und
• Schaumglasbrocken aus gebrochenem Schaumglas (13) mit Durchmessern von >0 mm bis ≤16 mm als Zuschlagsstoff,
**dadurch gekennzeichnet, dass** die Schaumglasbrocken (13) sich aus 2 Volumenteilen mit Durchmessern im Bereich von >0 bis ≤4 mm, 1 Volumenteil mit Durchmessern im Bereich von >4 mm bis ≤8 mm und 1 Volumenteil mit Durchmessern im Bereich von >8 mm bis ≤16 mm zusammensetzen.

2. Erdfeuchter Frischbeton (10) nach Anspruch 1, umfassend Gewichtsanteile von Bindemittel, Hydratisierungsmittel und Schaumglasbrocken in folgendem Verhältnis:
• 4 Teile Bindemittel (11);
• 2 Teile Hydratisierungsmittel (12);
• 3 Teile Schaumglasbrocken (13) mit Durchmessern von >0 mm bis ≤16 mm.

3. Erdfeuchter Frischbeton (10) nach Anspruch 1, umfassend Gewichtsanteile von Bindemittel, Hydratisierungsmittel, Schaumglasbrocken und Sand und/oder Kies in folgendem Verhältnis:
• 4 Teile Bindemittel (11);
• 2 Teile Hydratisierungsmittel (12);
• 2 Teile Schaumglasbrocken (13) mit Durchmessern von >0 mm bis ≤16 mm;
• 1 Teil Sand und/oder Kies.

4. Erdfeuchter Frischbeton (10) nach einem der Ansprüche 1 bis 3, weiter umfassend mindestens ein Additiv (14), insbesondere Luftporenbildner, Fliessmittel und/oder Viskositätsmodifizierer.

5. Verfahren zum Herstellen von erdfeuchtem Frischbeton (10) nach einem der Ansprüche 1 bis 4 umfassend die folgenden Schritte in der angegebenen Reihenfolge:
• Mischen der Schaumglasbrocken (13), des Bindemittels (11) und optional eines in fester Form vorliegenden Additivs (14) für 30 bis 120 s;
• Optionales Zugeben eines in flüssiger Form vorliegenden Additivs (14);
• Zugeben des Hydratisierungsmittels (12);
• Erneutes Mischen für 60 bis 180 s.

6. Betonelement (100) aus Festbeton, hergestellt aus erdfeuchtem Frischbeton (10) nach einem der Ansprüche 1 bis 4.

7. Betonelement (100) nach Anspruch 6 mit einer Deckschicht (15), insbesondere aus Sand und/oder Kies.

8. Verfahren zum Herstellen eines Betonelements (100) umfassend die folgenden Schritte:
• Beschicken einer Form mit erdfeuchtem Beton (10) nach einem der Ansprüche 1 bis 4;
• Rütteln der beschickten Form, insbesondere für 5 bis 60 s;
• Pressen des erdfeuchten Betons (10) in der Form, insbesondere durch einen Hydraulikstempel;
• Erstarren des gerüttelt und gepressten erdfeuchten Betons (10), insbesondere für mindestens 24 h.

9. Verfahren nach Anspruch 8, wobei die Schritte des Rüttelns und des Pressens gleichzeitig, teilweise gleichzeitig, direkt nacheinander, oder zeitversetzt ausgeführt werden.

10. Verfahren nach Anspruch 8 oder 9, zusätzlich umfassend den folgenden Schritt:
• teilweises Beschicken der Form mit Sand (15a) und/oder Kies (15b), entweder vor, nach, oder vor und nach dem Schritt des Beschickens einer Form mit erdfeuchtem Frischbeton (10).

11. Verwendung eines Betonelements (100) nach Anspruch 6 oder Anspruch 7, als:
• Pflasterstein;
• Gehwegplatte;
• Dachplatte;
• Terrassenplatte;
• Gestaltungselement;
• Lärmschutzelement; oder
• in Verbunddecken mit Holz.

## Claims

1. Earth-moist fresh concrete (10), comprising:
• at least one binder (11);
• at least one hydrating agent (12); and
• foam glass lumps of broken foam glass (13) with diameters from >0 mm to ≤16 mm as an aggregate,
**characterized in that** the foam glass lumps (13) are composed of 2 volume parts with diameters in the range from >0 to ≤4 mm, 1 volume part with diameters in the range from >4 mm to ≤8 mm and 1 volume part with diameters in the range from >8 mm to ≤16 mm.

2. Earth-moist fresh concrete (10) according to claim 1, comprising parts by weight of binder, hydrating agent and foam glass lumps in the following ratio:
• 4 parts binder (11);
• 2 parts hydrating agent (12);
• 3 parts foam glass lumps (13) with diameters of >0 mm to ≤16 mm.

3. Earth-moist fresh concrete (10) according to claim 1, comprising parts by weight of binder, hydrating agent, foam glass lumps and sand and/or gravel in the following ratio:
• 4 parts binder (11);
• 2 parts hydrating agent (12);
• 2 parts foam glass lumps (13) with diameters of >0 mm to ≤16 mm;
• 1 part sand and/or gravel.

4. Earth-moist fresh concrete (10) according to one of claims 1 to 3, further comprising at least one additive (14), in particular air-entraining agent, superplasticizer and/or viscosity modifier.

5. Method for producing earth-moist fresh concrete (10) according to one of claims 1 to 4, comprising the following steps in the given order:
• mixing the foam glass lumps (13), the binder (11) and optionally an additive (14) present in solid form for 30 to 120 s;
• optionally adding an additive (14) in liquid form;
• adding the hydrating agent (12);
• mixing again for 60 to 180 s.

6. Concrete element (100) of hardened concrete, produced from earth-moist fresh concrete (10) according to one of claims 1 to 4.

7. Concrete element (100) according to claim 6 with a covering layer (15), in particular of sand and/or gravel.

8. Method for producing a concrete element (100), comprising the following steps:
• charging a mold with earth-moist concrete (10) according to one of claims 1 to 4;
• vibrating the charged mold, in particular for 5 to 60 s;
• pressing the earth-moist concrete (10) in the mold, in particular by a hydraulic ram;
• solidification of the vibrated and pressed earth-moist concrete (10), in particular for at least 24 h.

9. Method according to claim 8, wherein the steps of vibrating and pressing are carried out simultaneously, partially simultaneously, directly one after the other, or with a time delay.

10. Method according to claim 8 or 9, additionally comprising the following step:
• partially charging the mold with sand (15a) and/or gravel (15b), either before, after, or before and after the step of charging a mold with earth-moist fresh concrete (10).

11. Use of a concrete element (100) according to claim 6 or claim 7, as:
• paving stone;
• paving slab;
• roof slab;
• terrace slab;
• design element;
• noise protection element; or
• in composite floors with wood.

## Revendications

1. Béton frais à consistance de terre humide (10) comprenant :
- au moins un liant (11) ;
- au moins un agent hydratant (12) ; et
- des fragments de verre cellulaire composés de verre cellulaire concassé (13) de diamètres compris entre > 0 mm à ≤ 16 mm comme additif, **caractérisé en ce que** les fragments de verre cellulaire (13) se composent de 2 parties en volume avec des diamètres compris dans la plage allant de > 0 mm à ≤ 4 mm, 1 partie en volume avec des diamètres dans la plage allant de > 4 mm à ≤ 8 mm et 1 partie en volume avec des diamètres dans la plage allant de > 8 mm à ≤ 16 mm.

2. Béton frais à consistance de terre humide (10) selon la revendication 1, comprenant des parties en poids de liant, d'agent hydratant et de fragments de verre cellulaire dans les proportions suivantes :
- 4 parties de liant (11) ;
- 2 parties d'agent hydratant (12) ;
- 3 parties de fragments de verre cellulaire (13) avec des diamètres allant de > 0 mm à ≤ 16 mm.

3. Béton frais à consistance de terre humide (10) selon la revendication 1, comprenant des parties en poids de liant, d'agent hydratant, de fragments de verre cellulaire et de sable et/ou gravier dans les proportions suivantes :
- 4 parties de liant (11) ;
- 2 parties d'agent hydratant (12) ;
- 2 parties de fragments de verre cellulaire (13) avec des diamètres allant de > 0 mm à ≤ 16 mm ;
- 1 partie de sable et/ou gravier.

4. Béton frais à consistance de terre humide (10) selon l'une des revendications 1 à 3, comprenant en outre au moins un additif (14), en particulier des entraîneurs d'air, des fluidifiants et/ou des agents modificateurs de viscosité.

5. Procédé pour fabriquer du béton frais à consistance de terre humide (10) selon l'une des revendications 1 à 4 comprenant les étapes suivantes dans l'ordre indiqué :
- mélanger les fragments de verre cellulaire (13), le liant (11) et facultativement un additif présent sous forme solide (14) pendant 30 à 120 s ;
- ajouter facultativement un additif présent sous forme liquide (14) ;
- ajouter l'agent hydratant (12) ;
- mélanger de nouveau pendant 60 à 180 s.

6. Elément en béton (100) en béton durci fabriqué à partir de béton frais à consistance de terre humide (10) selon l'une des revendications 1 à 4.

7. Elément en béton (100) selon la revendication 6 avec une couche supérieure (15), en particulier en sable et/ou gravier.

8. Procédé pour fabriquer un élément en béton (100) comprenant les étapes suivantes :
- charger un moule avec du béton à consistance de terre humide (10) selon l'une des revendications 1 à 4 ;
- secouer le moule chargé, en particulier entre 5 et 60 s ;
- presser le béton à consistance de terre humide (10) dans le moule, en particulier avec un étançon hydraulique ;
- solidifier le béton à consistance de terre humide secoué et pressé (10), en particulier pendant au moins 24 h.

9. Procédé selon la revendication 8, les étapes de secouage et de pressage étant réalisées simultanément, au moins partiellement de manière simultanée, directement l'une après l'autre ou en différé.

10. Procédé selon la revendication 8 ou 9, comprenant en outre l'étape suivante :
- charger partiellement le moule avec du sable (15a) et/ou du gravier (15b) soit avant, après, soit avant et après l'étape consistant à charger un moule avec du béton frais à consistance de terre humide (10).

11. Utilisation d'un élément en béton (100) selon la revendication 6 ou 7 comme :
- pavé ;
- dalle ;
- panneau de toiture ;
- dalle de terrasse ;
- élément de structure ;
- élément antibruit ; ou
- dans des dalles mixtes avec du bois.
